Europäisches Patentamt

European Patent Office

Office européen des brevets

(19)

(11) Publication number: **0 171 740**
**A2**

# EUROPEAN PATENT APPLICATION

(12)

(21) Application number: **85109902.8**

(22) Date of filing: **06.08.85**

(51) Int. Cl.⁴: **G 01 N 27/46**

(30) Priority: **17.08.84 US 641651**

(43) Date of publication of application:
**19.02.86 Bulletin 86/8**

(84) Designated Contracting States:
**DE FR GB IT**

(71) Applicant: **GENERAL ELECTRIC COMPANY**
**1 River Road**
**Schenectady New York 12305(US)**

(72) Inventor: **Niedrach, Leonard William**
**1403 Myron Street**
**Schenectady New York 12309(US)**

(72) Inventor: **Will, Fritz Gustav**
**102 Berkley Square**
**Scotia New York 12302(US)**

(74) Representative: **Catherine, Alain**
**General Electric - Deutschland Munich Patent Operation**
**Frauenstrasse 32**
**D-8000 München 5(DE)**

(54) **Long life portable oxygen sensor.**

(57) A long life oxygen sensor is provided. The oxygen sensor includes an oxygen permeable membrane exposed to the gas to be sensed, a catalyzed oxygen reduction electrode wet with a hydroxide, a porous metal counter electrode subject to oxidation and an electrical circuit capable of displaying the relation between electrical current generated between the electrodes of the device and the partial pressure of oxygen at the permeable membrane.

FIG. 2

0171740

LONG LIFE PORTABLE OXYGEN SENSOR

BACKGROUND OF THE INVENTION

The present invention relates to oxygen sensors suitable for use in spacecraft and for other uses. More specifically, it relates to extending the useful life of oxygen sensors such as are used on the space shuttle.

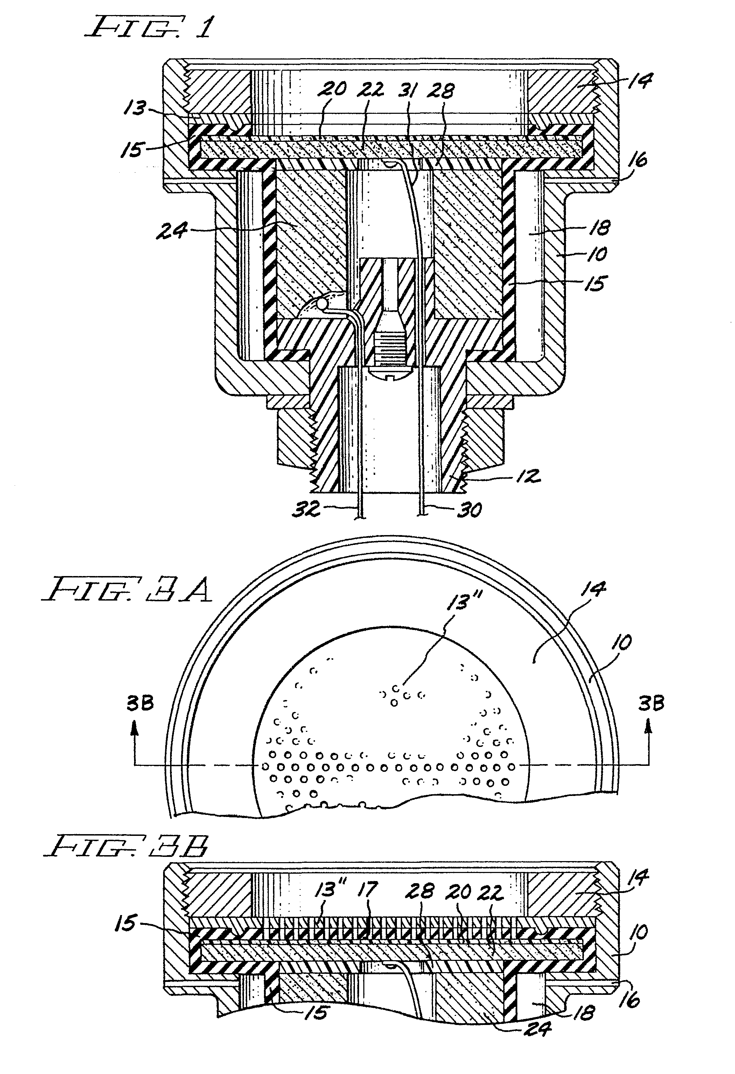

It has been observed that an oxygen sensor as illustrated in Figure 1 has a total life of approximately 8000 hours when exposed to 1 atmosphere of air at 75°F. Total life includes both useful operating life and exposure to oxygen for testing, storage and for any other reason. The calculated total life of a sensor as illustrated in Figure 1 is approximately 9200 hours. The original specifications of the National Aeronautics and Space Administration for such sensors is 6236 operational hours of useful operating life.

Because substantial testing and operation of sensors is necessary prior to an actual mission, an appreciable portion of the total life of such a sensor is used up in laboratory testing, in various calibrations and in an air exposure aboard the spacecraft before the scheduled launch. This can be further extended by delays in the actual launch thus using up a further portion of the total life of the sensor. In all, a significant fraction of the total life of the sensor is used in this way. For these and other reasons, reduced sensor output has mandated premature sensor replacement prior to a number of space shuttle mission. There is considerable interest in NASA in oxygen sensors having much longer operating life for space applications

## BRIEF STATEMENT OF THE INVENTION

Accordingly, it is one object of the present invention to improve the design of oxygen sensors for space and other applications.

Another object is to provide an oxygen sensor having an extended sensor life.

Another object is to provide an oxygen sensor having a useful life which is greater than two times the life of the prior art sensors.

Another object is to provide an oxygen sensor for space applications which has a life of a multiple of average life of prior art sensors.

A further object is to provide a design of an oxygen sensor which has a life expectancy of 20 years or more.

Other objects and advantages of the present invention will be, in part, apparent and, in part, pointed out in the description which follows.

In one of its broader aspects, objects of the present invention may be achieved by altering a prior art sensor having a membrane covering a sensing electrode. A gasket with a cutout of desired area is placed in front of the membrane and sealed to the membrane in an air-tight manner so as to reduce the active area of the sensing electrode of the sensor. The sensor is used with a different electrical resistance network and with the reduced effective sensing electrode area. Sensor life is thereby extended whereas unexpectedly it has been discovered that the sensor sensitivity remains unchanged.

## BRIEF DESCRIPTION OF THE DRAWINGS

The description which follows will be better understood by reference to the accompanying drawings in which:

FIGURE 1 is an axial sectional view of an oxygen sensor as provided by the prior art.

FIGURE 2 is a partial sectional view of a sensor as in Figure 1 but modified pursuant to the present invention.

FIGURES 3A and 3B are plan and sectional views respectively of an alternative mode of modification of the sensor of Figure 1.

FIGURE 4 is a vertical sectional view of the upper portion of the oxygen sensor of the present invention illustrating further alternative modifications of the unit.

FIGURE 5 is a schematic drawing of a sensing circuit as provided in connection with the present invention.

## DETAILED DESCRIPTION OF THE INVENTION

The sensor of Figure 1 is a prior art sensor and is essentially a copper-air battery. It includes an outer housing 10, which may be of metal, and having an insulating bushing 12 at its lower end and an externally threaded plastic insert 14 at its upper end. Between the bushing 12 and the insert 14 are essential elements of the sensor. An impervious washer 13 is positioned between the upper portion of bladder 15 and insert 14. This holds the top inwardly extending portion of bladder 15 against the outer portions of membrane 20 and defines the area of membrane 20 exposed

-3-

to the atmosphere. An expansion bladder 15, of neoprene or other suitable rubber such as ethylene propylene rubber, laterally surrounds the essential components of the battery and is positioned between these elements and the housing 10. The bladder 15 is spaced from the walls of the housing in the lower portion of the housing to permit its lateral expansion and vent holes 16 provide means by which gas pressure is equilibrated between the space 18, between the housing and the bladder, and the outside atmosphere. At the upper part of the essential elements of the sensor is a polymer membrane 20. The polymer membrane has the capacity to perfuse and pass oxygen at a rate which is proportional to the partial pressure of oxygen in contact with the exterior surface of the membrane. Oxygen which is in contact with the exterior of the sensor passes through the membrane 20 and into contact with a sensing electrode 22. The membrane may be formed of other polymers suitably permeable to oxygen such as polysulfone.

The sensing electrode is porous metal and it is gold plated. The function of the gold on the sensing electrode is that of catalyzing the electro-reduction of oxygen. The extent of gold plating must be sufficient to permit effective reduction of the oxygen and this degree of plating to achieve such effective reduction will be apparent to those skilled in the art. The porous sensing electrode makes contact with and has its pores wetted with potassium hydroxide electrolyte contained within the internal chamber of the sensor where a porous copper counter electrode 24 is located. The copper counter electrode is separated from the sensing electrode 22 by the insulating ring 28.

Suitable circuitry such as is illustrated in and described with reference to Figure 5 is provided between the sensing electrode and the copper counter electrode. This

-4-

circuitry includes connecting wires 30 and 32, a resistance network and a thermistor to compensate for temperature variations. Circuitry also includes a voltmeter from which readings can be taken of the voltage drop across the network resulting from the current flow between the sensing electrode 20 and the porous copper counter electrode 24 to provide an indication of the partial pressure of oxygen which is in contact with the exterior surface of the polymer membrane 20.

When oxygen diffuses through the polymer membrane and comes in contact with the sensing electrode wetted with potassium hydroxide electrolyte it is reduced electrochemically by electrons derived via the external wires and circuitry from the porous copper counter electrode 24 which is concurrently oxidized electrochemically. At constant temperature the rate of these reactions, and hence the associated current flow is proportional to the oxygen partial pressure in the environment being monitored. The current causes a potential drop across the resistance network connecting sensing electrode 22 and the porous copper counter electrode 24 which is measured by a voltmeter connected across the network. Wire 30 is connected through wire 31 to the sensing electrode and wire 32 is connected to the porous copper electrode 24.

The following are a few of the particulars of this prior art structure. The oxygen-diffusing membrane is a composite of fluorinated ethylene propylene polymer (FEP) and tetrafluoro ethylenepolymer (PTFE) membrane. See in this connection U.S. Patent 3,616,411 as to alternative membranes.

The potassium hydroxide solution is a 25 weight % KOH electrolyte. The thickness of the oxygen permeable membrane is typically about 0.025 mm. The sensing electrode is a disk with a 3.3 cm diameter and a 0.14 cm thickness. The counter electrode is a copper cylinder with a center bore weighing 7.6 gm. It has an outer diameter of 1.8 cm, an inner diameter of 0.8 cm and a length of 1.2 cm. The spacing between the sensing electrode and the counter electrode is of the order of one millimeter and is not critical.

When the sensor is exposed to air or oxygen, oxygen gas permeates through the membrane and is reduced at the sensing electrode. At the same time, the counter copper electrode is oxidized to copper oxide. The resulting current flows through an external resistor network and produces a voltage which is read on a voltmeter.

Typically, at a temperature of 75°F, the resistor network has a resistance of 110 ohms. Exposure of the sensor to air at 1 atmosphere pressure produces a current of about 400 microamperes (µa) and an output voltage of 44 millivolts across the resistor network. If the exposed surface of the membrane and the resistance values of the resistor network and the concentration of oxygen in air at constant temperature to which the sensor is exposed are all maintained as provided in prior art devices as specified above, the life of the prior art sensor is about 8800 hours. A sensing circuit suitable for use in connection with a sensor as provided pursuant to the present invention is illustrated schematically in Figure 5.

The circuit is connected to sensing electrode 122 and counter electrode 124 by the wires 130 and 132. These elements of the circuit appear in Figure 1 under the numerals 22, 24, 30 and 32 respectively.

A voltmeter 140 is connected in series with the sensing electrode 122 and counter electrode 124 through the wires 130 and 132 and gives a reading in millivolts of the

-6-

voltage developed between the two electrodes when oxygen is being reduced as sensing electrode 122. The current can be calibrated in terms of partial pressure of oxygen to which sensor electrode 122 is exposed as is conventional with oxygen sensors. Some details of oxygen sensing equipment are described in the U.S. patents 3,149,921 and 3,616,411 which are incorporated herein by reference.

A varistor/resistor network 144, enclosed by dashed lines in Figure 5, is provided in parallel with a voltage meter 140 to permit a selected voltage to be developed between lines 130 and 132. The network consists of a variable resistor 146 in series with a varistor 148, and a second variable resistor 150 in parallel with varistor 148. The varistor is incorporated in the known prior art circuit as illustrated to provide compensation for change in temperature of the sensor.

As indicated above for prior art sensors, typically at a temperature of 75°F, the resistor network has a resistance from line 130 to line 132 of 110 ohms. Output voltage is 44 millivolts on exposure of such prior art sensor to air at 1 atmosphere pressure and a current of about 400 microamperes is generated.

The prior art oxygen sensors as described above have been used for a number of years. Sensors as described above have been supplied to NASA for a period of over eight years.

Surprisingly, we have now discovered that the sensitivity of the prior art device is not dissipated or lost if the area of the exposed sensing electrode 22 and associated membrane 20 is significantly reduced. More surprisingly, we have found that the sensitivity is retained even though the area of membrane 20 and electrode 21 is greatly reduced.

-7-

We have now discovered that the sensors as described above can be given a vastly increased range of applications.  More surprisingly, we have discovered that this increased range can be achieved with very modest alterations of the device.

What we have discovered can be expressed in various fashions.

With regard to cost, we have found it possible to provide essentially the same time span of oxygen sensing, i.e., providing continuous sensing of oxygen in air at normal temperatures and pressures at only a fraction of the cost of sensing according to the teaching of the prior art. In this case, the fraction can be one half, or one fourth, or one tenth, or even 1/20th of the cost of continuous oxygen sensing by prior art methods and apparatus.

When expressed in terms of portability, we have discovered how to provide continuous portable oxygen sensing in a very compact unit which does not require any auxilliary source of power and does not require any renewal or replacement of materials over a period of ten or twenty years or more.

In terms of reliability, the unit is as reliable as units presently furnished to NASA for use on space craft and having an expected useful life of the order of one year.

The unique advantages of the device of the present invention greatly extends its range of uses and applications.

For example, it is possible to provide an oxygen sensor for use in hospitals or other environments where oxygen is in use and where leakage may be dangerous as in presenting a fire hazard or the like.  Thus, a unit can be installed in a hospital and provide a continuous monitoring of the level of oxygen, and detect any increases in oxygen concentration from leaks in the normal hospital supply over a period of 10 or 20 years or more. And this capability can be provided without any need to resort to separate supply or replenishment of materials or use of auxilliary power sources or the like.

The way in which the novel properties and performance of the units of this invention are achieved is by limiting the consumption rate of oxygen and hence of the copper and by simultaneously increasing the resistance values of the resistor network.

The total life of the device of Figure 1 can be extended by a factor of 20 by limiting the diameter of the exposed portion of the sensing electrode to between 0.4 and 0.7 centimeters. For identical sensor output, the value of the resistor network is raised to about 2200 ohms. A current of about 20 microamperes ($\mu$A) is generated from this combination of smaller exposed area of sensor electrode and higher resistance of the coupled resistor network.

We find it quite remarkable that a unit which has been in use for many years in the form described above for prior art devices can be altered so dramatically in its performance capabilities, with at least a 20 fold enlargement in the continuous monitoring capability without loss of sensitivity, and yet, the measures needed to extend the life are on such a relatively simple scale.

Moreover, it is striking that a unit which has the inherent capability to be modified to a vastly extended useful life and correspondingly lower cost has been in use over such an extended period without awareness on the part of the skilled technicians using them that the continuous monitoring capability of the units could be extended from about one year to over twenty years and longer without reduction in sensitivity.

We have found that the useful life of the prior art units can be doubled by restricting the area of the oxygen sensor which receives oxygen from an ambient atmosphere to about one half that employed in the prior art devices, where the values of the resistor network are increased twofold.

We have discovered that when the exposed area of the sensor electrode-membrane subassembly is reduced to about one half the area of the prior art device with which its performance is compared and the resistance of the resistor/varistor network is about doubled, the operating time (based on accelerated testing) doubles to between 17,594 and 21,885 hours.

We judge that the area of the oxygen sensor which receives oxygen can be restricted to a degree which reduces the current generated by the device (with simultaneously adjusted resistor network) from the 400 microamperes of prior art devices to about 10 microamperes without substantial loss of accuracy or reliability of the sensor due to background noise.

Specifically, some ways in which the oxygen access to the oxygen sensor electrode are restricted in accordance with this invention are discussed now relative to the Figures.

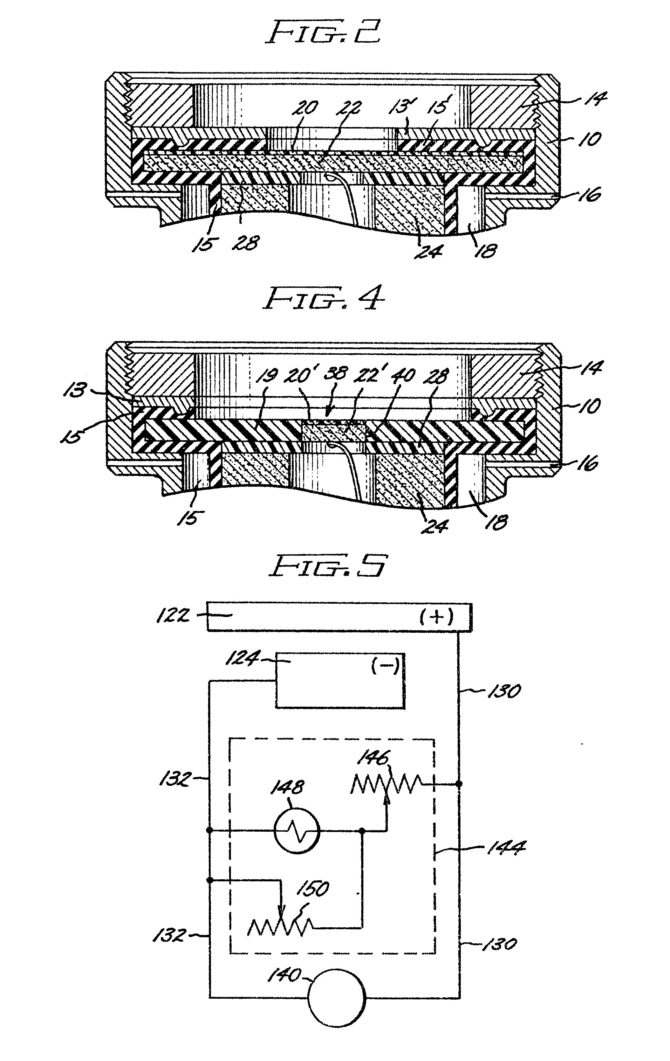

Referring now next to Figure 2, a partial section view of the oxygen sensor of this invention is illustrated. The resistor/varistor network used in connection with this device is essentially as illustrated in Figure 5 but the resistance of the network is about doubled.

In Figure 2, the numbered parts correspond to the parts as marked in Figure 1. However, the washer 13' is enlarged inwardly to cover half of the area of the membrane 20 and sensing electrode 22 which had previously been exposed as in Figure 1. Also, the upper and inwardly extending portion of bladder 15' is extended inwardly to cover the portion of the membrane 20 and sensor electrode beneath the inwardly extending washer 13'.

It was quite surprising to find that by making this combination of changes to the device as illustrated in Figures 1 and 5 there was, in fact, no loss in sensitivity of the oxygen sensor as a sensor. In other words, we have confirmed experimentally that when the area of the membrane/sensor electrode is about halved and the resistance of the resistor/varistor network is about doubled, there is no reduction in the capability of the resulting sensor to serve as an oxygen sensor but the total life of the sensor is about doubled.

There are other and alternative structures and methods for carrying out the present invention. One such other structure is illustrated in Figures 3A and 3B. In these figures the numbered parts correspond to the parts similarly numbered in Figure 1. The difference between the structure of Figure 1 and that of Figures 3A and 3B concerns again the modification of the washer 13 to 13" and the modification of the gasketing material 17 between the inwardly expanded washer 13" and the membrane 20/sensor electrode 22 subassembly. In the specific case of the structure of Figures 3A and 3B the washer 13 is in the form of a perforated disk 13" as best seen in Figure 3A. The gasket 17 has matching and alligned perforations so that the area of the perforations establishes and determines the area of the sensor electrode/permeable membrane which is exposed to the ambient atmosphere. This area may be one half, or one fourth or one tenth of area of the sensor/membrane as provided in Figure 1. It may be significantly less and may be as small as one twentieth or one fortieth of smaller and still provide the same sensitivity as the device illustrated in Figure 1.

It will be realized that in modifying the device of Figure 1, the membrane/sensor subassembly remained essentially the same as that illustrated in Figure 1. What is modified is the effective area of the subassembly, that is, the area which was exposed to the ambient atmosphere and the area through which oxygen may permeate to the interior of the sensor.

A further and alternative modification of the membrane/sensor subassembly is illustrated in Figure 4. In this figure, as in Figures 2 and 3, the numbered parts are identical to those similarly numbered in Figure 1. In this figure, a partial sectional view of a sensor as provided pursuant to this invention is illustrated. In this configuration, the membrane/sensor subassembly is modified from that illustrated in Figure 1. In this configuration the membrane/sensor subassembly 38 may be greatly reduced in diameter and is hermetically sealed into a center opening 40 in an otherwise impermeable disk 19. The smaller membrane/sensor subassmebly is of the same structure as the subassembly of Figure 1. It has an oxygen permeable membrane mounted to a gold plated porous nickel sensor electrode and is the same as the elements 20 and 22 of Figure 1 except as to diameter. The smaller diameter makes it possible to greatly extend the total life of the sensor without loss of sensitivity or reliability of the sensor. Appropriate increase of the resistance of network such as 144 of Figure 5 is made in combination with reduction of membrane/sensor area to bring the voltage derived from operation of the sensor to the proper level.

The voltage generated by the device and/or the current may be processed as a signal.

Auxilliary means may be employed in connection with the sensor to amplify the signal generated; to sound alarms when the signal is below or above selected values or levels; to calibrate and/or coordinate the signal with oxygen level; to measure pressure independently and combine the pressure measurement and oxygen partial pressurement. All of the above can be done by and has been done by prior art means in connection with use of the sensor to ensure a suitable atmosphere in a space craft.

What is claimed and sought to be protected by Letters Patent of the United States is as follows:

1. A portable long life oxygen sensor comprising a sensor electrode adapted to reduce oxygen which permeates thereto through a diffusion barrier, a counter electrode of porous copper metal, a set of conductors and a resistor network providing a series of electric connection between said electrodes, an aqueous alkaline solution providing an electrolytic path between said electrodes, said sensor having an area of sensor electrode, a quantity of copper, and a resistance value of said resistor network which permits said sensor to sense oxygen at 1 atmosphere and room temperature continuously for at least two years.

2. The portable sensor of claim 1 in which the weight of copper is less than 10 grams.

3. The portable sensor of claim 1 in which the exposed area of the diffusion barrier is 2.5 sq. cm.

4. The portable sensor of claim 1 in which the resistance value of the network is over 200 ohms.

5. The portable sensor of claim 1 in which the quantity of copper is less than 10 grams, the exposed area of the diffusion barrier is about 2.5 sq. cm. and the resistance value of the resistor network is about 220 ohms.

6. The portable sensor of claim 1 in which the resistor network resistance value is above 2000 ohms.

-14-

7.   The portable sensor of claim 1 in which the diameter of the exposed area of the diffusion barrier is between 0.4 and 0.7 centimeters.

8.   The portable sensor of claim 1 in which the quantity of copper counter electrode is less than 10 grams, the exposed area of the diffusion barrier is 0.25 square centimeters and the resistance of the resistance network is above about 2000 ohms.

PER:el

-15-

*FIG. 1*

13
15
24

20 22 31 28

14
16
18
10
15

12
32    30

*FIG. 3A*

13"

14
10

3B                    3B

*FIG. 3B*

13" 17  28 20 22

14

15

10

15    18    16
24

*FIG.2*

*FIG.4*

*FIG.5*